# EUROPEAN PATENT APPLICATION

(11) **EP 4 841 873 A1**
(43) Date of publication of application: **18.11.2026**
(21) Application number: 26172385.2
(22) Date of filing: 14.04.2026
(51) Int. Cl.: H02M 1/00, H02M 3/00, H02M 3/335

(54) **PHASE SHIFT CONTROL METHOD AND DC-TO-DC CONVERTER**

(30) Priority: 15.05.2025 CN 202510629308
(71) Applicant: Delta Electronics (Thailand) Public Company Limited, Samutprakarn 10280 (TH)
(72) Inventor: JIANG, Zhonghui, 201209 Shanghai (CN); YANG, Fan, 201209 Shanghai (CN); SUN, Jia, 201209 Shanghai (CN); HUA, Ruide, 201209 Shanghai (CN); LIAO, Yongkai, 201209 Shanghai (CN)
(74) Representative: 2K Patent Partnerschaft mbB

(57) **Abstract**

A phase shift control method for a DC-to-DC converter includes: determining a work mode of the DC-to-DC converter (100); when the DC-to-DC converter (100) operates in a boost mode and an output power is less than a first power value (PW1), setting a switch frequency (Fs) of the DC-to-DC converter (100) to a first predetermined frequency (F1), controlling the second switch bridge arm (12) to lag the first switch bridge arm (11) by a first dynamic phase (P21), controlling the third switch bridge arm (21) to lead the first switch bridge arm (11) by a first predetermined phase (P11), controlling the fourth switch bridge arm (22) to lag the first switch bridge arm (11) by a second predetermined phase (P12); when the DC-to-DC converter (100) operates in the boost mode and the output power is greater than a second power value (PW2), setting the switch frequency (Fs) of the DC-to-DC converter (100) to be negatively correlated with the output power, and controlling the fourth switch bridge arm (22) to lag the first switch bridge arm (11) by a third predetermined phase (P13).

## Description

### BACKGROUND

### Technical Field

The present disclosure relates to a phase shift control method and a DC-to-DC converter, and more particularly to a phase shift control method and a DC-to-DC converter for reducing light-load ripple.

### Description of Related Art

The statements in this section merely provide background information related to the present disclosure and do not necessarily constitute prior art.

The converter with a wide output voltage range based on LLC resonant topology adopts pulse frequency modulation (PFM) control method. Due to the limitation of frequency range, when the switch frequency reaches the highest (i.e., the lowest gain), it can still output higher power.

Under light load conditions, a certain control method is required to meet the output gain while outputting a smaller power. For this requirement, the conventional control method is burst mode control. However, in the burst mode, the output will produce a large ripple, which may not meet the requirements of users.

Therefore, how to design a phase shift control method and a DC-to-DC converter to solve the problems and technical bottlenecks in the existing technology has become a critical topic in this field.

### SUMMARY

In one objective of the present disclosure is to provide a phase shift control method for a DC-to-DC converter to solve the problems of existing technologies.

The phase shift control method for a DC-to-DC converter is provided. The DC-to-DC converter includes a primary-side circuit, a secondary-side circuit, and a resonant tank coupled between the primary-side circuit and the secondary-side circuit. The primary-side circuit includes a first switch bridge arm and a second switch bridge arm, and the secondary-side circuit includes a third switch bridge arm and a fourth switch bridge arm. The phase shift control method includes: determining a work mode of the DC-to-DC converter; when the DC-to-DC converter operates in a boost mode and an output power is less than a first power value, setting a switch frequency of the DC-to-DC converter to a first predetermined frequency, controlling the second switch bridge arm to lag the first switch bridge arm by a first dynamic phase, controlling the third switch bridge arm to lead the first switch bridge arm by a first predetermined phase, controlling the fourth switch bridge arm to lag the first switch bridge arm by a second predetermined phase, wherein the first dynamic phase is negatively correlated with the output power; when the DC-to-DC converter operates in the boost mode and the output power is greater than a second power value, setting the switch frequency of the DC-to-DC converter to be negatively correlated with the output power, and controlling the fourth switch bridge arm to lag the first switch bridge arm by a third predetermined phase, wherein the second power value is greater than the first power value.

In one embodiment, "the first dynamic phase is negatively correlated with the output power" includes: controlling the first dynamic phase to gradually decrease to 0 as the output power increases, and controlling the first dynamic phase to gradually increase from 0 as the output power decreases.

In one embodiment, "setting the switch frequency of the DC-to-DC converter to be negatively correlated with the output power" comprises: controlling the switch frequency of the DC-to-DC converter to gradually decrease from a second predetermined frequency as the output power increases, and controlling the switch frequency of the DC-to-DC converter to gradually increase to the second predetermined frequency as the output power decreases, wherein the second predetermined frequency is greater than the first predetermined frequency.

In one embodiment, the first switch bridge arm includes a first upper switch and a first lower switch connected in series, the second switch bridge arm includes a second upper switch and a second lower switch connected in series, the third switch bridge arm includes a third upper switch and a third lower switch connected in series, the fourth switch bridge arm includes a fourth upper switch and a fourth lower switch connected in series, wherein the first upper switch and the first lower switch are complementary to each other. "Controlling the second switch bridge arm to lag the first switch bridge arm by a first dynamic phase" further includes: controlling a second driving signal of the second upper switch of the second switch bridge arm to lag a third driving signal of the first lower switch of the first switch bridge arm by the first dynamic phase, and controlling a fourth driving signal of the second lower switch of the second switch bridge arm to lag a first driving signal of the first upper switch of the first switch bridge arm by the first dynamic phase. "Controlling the third switch bridge arm to lead the first switch bridge arm by a first predetermined phase" further includes: controlling a fifth driving signal of the third upper switch of the third switch bridge arm to lead the first driving signal of the first upper switch of the first switch bridge arm by the first predetermined phase, and controlling a seventh driving signal of the third lower switch of the third switch bridge arm to lead the third driving signal of the first lower switch of the first switch bridge arm by the first predetermined phase. "Controlling the fourth switch bridge arm to lag the first switch bridge arm by a second predetermined phase" further includes: controlling a sixth driving signal of the fourth upper switch of the fourth switch bridge arm to lag the third driving signal of the first lower switch of the first switch bridge arm by the second predetermined phase, and controlling an eighth driving signal of the fourth lower switch of the fourth switch bridge arm to lag the first driving signal of the first upper switch of the first switch bridge arm by the second predetermined phase. "Controlling the fourth switch bridge arm to lag the first switch bridge arm by a third predetermined phase" further includes: controlling the sixth driving signal of the fourth upper switch of the fourth switch bridge arm to lag the third driving signal of the first lower switch of the first switch bridge arm by the third predetermined phase, and controlling the eighth driving signal of the fourth lower switch of the fourth switch bridge arm to lag the first driving signal of the first upper switch of the first switch bridge arm by the third predetermined phase.

In one embodiment, the phase shift control method further includes: when the output power of the DC-to-DC converter increases from the first power value to the second power value, controlling a phase that the fourth switch bridge arm lags the first switch bridge arm to gradually increase from the second predetermined phase to a fourth predetermined phase, controlling the switch frequency of the DC-to-DC converter to the first predetermined frequency, and controlling the third switch bridge arm to lead the first switch bridge arm by the first predetermined phase.

In one embodiment, the phase shift control method further includes: when the output power of the DC-to-DC converter gradually increases and is equal to the second power value, controlling the phase that the fourth switch bridge arm lags the first switch bridge arm to increase from the fourth predetermined phase to the third predetermined phase, controlling the switch frequency of the DC-to-DC converter to increase from the first predetermined frequency to the second predetermined frequency, controlling a phase that the third switch bridge arm leads the first switch bridge arm to linearly decrease from the first predetermined phase to 0, and controlling a phase change rate that the fourth switch bridge arm lags the first switch bridge arm to be greater than a change rate of the switch frequency of the DC-to-DC converter.

In one embodiment, the phase shift control method further includes: when the output power of the DC-to-DC converter decreases from the second power value to the first power value, controlling a phase that the fourth switch bridge arm lags the first switch bridge arm to gradually decrease from the fourth predetermined phase to the second predetermined phase, controlling the switch frequency of the DC-to-DC converter to the first predetermined frequency, and controlling the third switch bridge arm to lead the first switch bridge arm by the first predetermined phase.

In one embodiment, the phase shift control method further includes: when the output power of the DC-to-DC converter gradually decreases and is equal to the second power value, controlling the phase that the fourth switch bridge arm lags the first switch bridge arm to decrease from the third predetermined phase to the fourth predetermined phase, controlling the switch frequency of the DC-to-DC converter to decrease from the second predetermined frequency to the first predetermined frequency, controlling a phase that the third switch bridge arm leads the first switch bridge arm to linearly increase from 0 to the first predetermined phase, and controlling a phase change rate that the fourth switch bridge arm lags the first switch bridge arm to be less than or equal to a phase change rate of the switch frequency of the DC-to-DC converter.

In one embodiment, the first predetermined frequency, the second predetermined frequency, the first predetermined phase, the second predetermined phase, the third predetermined phase, the fourth predetermined phase, and the first dynamic phase are determined according to the output power of the DC-to-DC converter; the first power value and the second power value are determined according to an output voltage of the DC-to-DC converter, and the second predetermined frequency is less than or equal to a maximum frequency limit of the DC-to-DC converter.

In one embodiment, the phase shift control method further includes: when the DC-to-DC converter operates in a buck mode and the output power is less than a third power value, setting the switch frequency of the DC-to-DC converter to be a third predetermined frequency, and controlling the second switch bridge arm to lag the first switch bridge arm by a second dynamic phase, wherein the second dynamic phase is negatively correlated with the output power; when the DC-to-DC converter operates in the buck mode and the output power is greater than the third power value, setting the switch frequency of the DC-to-DC converter to be negatively correlated with the output power.

In one embodiment, "setting the second dynamic phase to be negatively correlated with the output power" includes: controlling the second dynamic phase gradually decreases to a fifth predetermined phase as the output power increases, and controlling the second dynamic phase gradually increases from the fifth predetermined phase as the output power decreases, wherein the fifth predetermined phase is not 0.

In one embodiment, "setting the switch frequency of the DC-to-DC converter to be negatively correlated with the output power" includes: controlling the switch frequency of the DC-to-DC converter to gradually decrease as the output power increases, and controlling the switch frequency of the DC-to-DC converter to gradually increase as the output power decreases.

In one embodiment, the phase shift control method further includes: when the output power of the DC-to-DC converter gradually increases and is equal to the third power value, controlling the switch frequency of the DC-to-DC converter to increase from the third predetermined frequency to a fourth predetermined frequency as the second dynamic phase decreases to 0, and then controlling the switch frequency of the DC-to-DC converter to gradually decrease from the fourth predetermined frequency.

In one embodiment, the phase shift control method further includes: when the output power of the DC-to-DC converter gradually decreases and is equal to the third power value, controlling the switch frequency of the DC-to-DC converter to gradually increase to a fourth predetermined frequency, and then controlling the switch frequency of the DC-to-DC converter to decrease from the fourth predetermined frequency to the third predetermined frequency as the second dynamic phase increases from 0.

In one embodiment, the third power value is determined according to an output voltage of the DC-to-DC converter; the third predetermined frequency, the fourth predetermined frequency, and the fifth predetermined phase are determined according to the output power of the DC-to-DC converter, and the fourth predetermined frequency is less than or equal to a maximum frequency limit of the DC-to-DC converter.

In one embodiment, when the DC-to-DC converter operates in the boost mode, a value of the second power value when the output power gradually increases is equal to a sum of a buffer power and a value of the second power value when the output power gradually decreases, and/or when the DC-to-DC converter operates in the buck mode, a value of the third power value when the output power gradually increases is equal to a sum of the buffer power and a value of the third power value when the output power gradually decreases.

In one embodiment, the resonant tank includes a transformer; the first switch bridge arm includes a first upper switch and a first lower switch connected in series, the second switch bridge arm includes a second upper switch and a second lower switch connected in series, the third switch bridge arm includes a third upper switch and a third lower switch connected in series, and the fourth switch bridge arm includes a fourth upper switch and a fourth lower switch connected in series. A connection midpoint in the first switch bridge arm and a connection midpoint in the second switch bridge arm are correspondingly connected to two ends of a primary-side winding of the transformer, and a connection midpoint in the third switch bridge arm and a connection midpoint in the fourth switch bridge arm are correspondingly connected to two ends of a secondary-side winding of the transformer.

In one embodiment, the DC-to-DC converter is a bidirectional converter, and/or the resonant tank is an LLC resonant tank or a CLLC resonant tank.

Another objective of the present disclosure is to provide a DC-to-DC converter to solve the problems of existing technologies.

Accordingly, the present disclosure proposes the phase shift control method and the DC-to-DC converter, which changes the gain of the DC-to-DC converter by combining phase shift control methods and t the frequency modulation control strategy. The phase shift control method can prevent the DC-to-DC converter (such as LLC circuit, CLLC circuit, etc.) from entering the burst mode under light load, and can make it work in the continuous mode, thereby solving the problem of excessive output ripple caused by the burst mode. At the same time, the control method also takes into account the light load efficiency.

It is to be understood that both the foregoing general description and the following detailed description are exemplary, and are intended to provide further explanation of the present disclosure as claimed. Other advantages and features of the present disclosure will be apparent from the following description, drawings, and claims.

### BRIEF DESCRIPTION OF DRAWINGS

The present disclosure can be more fully understood by reading the following detailed description of the embodiment, with reference made to the accompanying drawing as follows:
FIG. 1 is a circuit diagram of a DC-to-DC converter.
FIG. 2 is a schematic diagram of control signals for a phase shift control according to the present disclosure.
FIG. 3 is a flowchart of a phase shift control method for determining whether the DC-to-DC converter operates in a boost mode according to the present disclosure.
FIG. 4 is a flowchart of the phase shift control method for determining whether the DC-to-DC converter operates in a buck mode according to the present disclosure.
FIG. 5 is a schematic diagram of the phase shift control of increasing power when the DC-to-DC converter operates in the boost mode according to the present disclosure.
FIG. 6 is a schematic diagram of the phase shift control of decreasing power when the DC-to-DC converter operates in the boost mode according to the present disclosure.
FIG. 7 is a schematic diagram of the phase shift control of increasing power when the DC-to-DC converter operates in the buck mode according to the present disclosure.
FIG. 8 is a schematic diagram of the phase shift control of decreasing power when the DC-to-DC converter operates in the buck mode according to the present disclosure.
FIG. 9 is a schematic diagram of the phase shift control of a switching point (a second power value) when the DC-to-DC converter operates in the boost mode and the output power increases according to the present disclosure.
FIG. 10 is a schematic diagram of the phase shift control of the switching point (the second power value) when the DC-to-DC converter operates in the boost mode and the output power decreases according to the present disclosure.
FIG. 11 is a schematic diagram of the phase shift control of a switching point (a third power value) when the DC-to-DC converter operates in the buck mode according to the present disclosure.

### DETAILED DESCRIPTION

Some typical embodiments that implement the features and advantages of the present disclosure will be described in detail in the following description. It should be understood that the present disclosure can have various changes in different manners without departing from the scope of the present disclosure, and the description and drawings therein are essentially for the purpose of illustration rather than for limiting the present disclosure. For example, if the following content of the present disclosure describes that a first feature is set on or above a second feature, it means that it includes an embodiment in which the first feature and the second feature are directly in contact, and also includes an embodiment in which an additional feature can be set between the first feature and the second feature so that the first feature and the second feature may not be in direct contact. In addition, different embodiments of the present disclosure may use repeated reference numerals and/or symbols. These repetitions are for the purpose of simplification and clarity, and are not used to limit the relationship between the various embodiments and/or the appearance structures.

Furthermore, in order to facilitate the description of the relationship between a component or feature and another (plural) component or (plural) feature in the drawings, spatially related terms such as "upper", "lower", "top", "bottom" and similar terms may be used. In addition to the orientation shown in the drawings, spatially related terms are used to cover different orientations of the device in use or operation. The device may also be positioned otherwise (e.g., rotated 90 degrees or in other orientations), and the description of the spatially related terms used shall be interpreted accordingly. In addition, when a component is referred to as being "connected to" or "coupled to" another component, it may be directly connected to or coupled to the other component, or there may be intervening components. Although the numerical ranges and parameters of the broad scope of the present disclosure are approximate, the numerical values are stated as precisely as possible in the specific examples.

In addition, it is understood that although the terms "first", "second", etc. may be used in the scope of the patent application to describe different components, these components should not be limited by these terms, and these components described in the embodiments are represented by different component symbols. These terms are used to distinguish different components. For example, the first component may be referred to as the second component, and similarly, the second component may also be referred to as the first component without departing from the scope of the embodiment. The term "and/or" used herein includes any or all combinations of one or more related listed items. Except in the operation/working examples, or unless explicitly specified, all numerical ranges, quantities, values and percentages disclosed herein (such as those percentages of angles, time durations, temperatures, operating conditions, quantitative ratios and the like) should be understood as being modified by the terms "approximately" or "substantially" in all embodiments. Accordingly, unless otherwise indicated, the numerical parameters stated in the present disclosure and the accompanying patent application are approximate values that may vary as needed. For example, each numerical parameter should be interpreted at least according to the number of significant figures stated and by applying ordinary rounding principles. Ranges may be expressed herein as from one end/point to the other end/point or between two ends/points. All ranges disclosed herein include the ends/points unless otherwise specified.

Reference will now be made to the drawing figures to describe the present disclosure in detail. It will be understood that the drawing figures and exemplified embodiments of present disclosure are not limited to the details thereof.

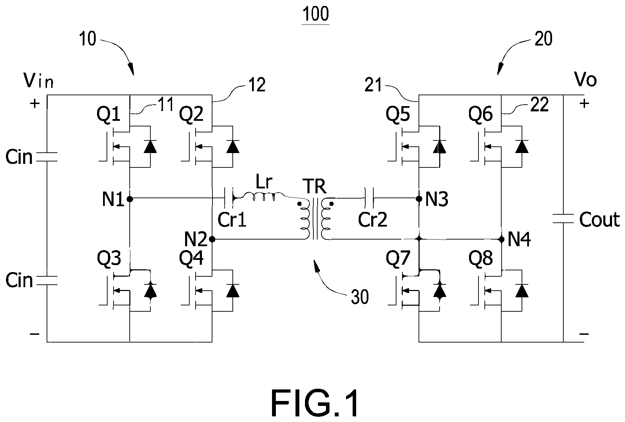

Please refer to FIG. 1, which shows a circuit diagram of a DC-to-DC converter. The DC-to-DC converter 100 includes an input port, a primary-side circuit 10, a secondary-side circuit 20, a resonant tank 30 coupled between the primary-side circuit 10 and the secondary-side circuit 20, and an output port. In one embodiment, the DC-to-DC converter 100 may be a bidirectional converter, and therefore the input port and the output port may be transposed, which is not limited in the present disclosure. The input port of the DC-to-DC converter 100 is connected to an input source to receive an input voltage Vin, and the output port of the DC-to-DC converter 100 may be connected to a load to output an output voltage Vo. It is understandable that the input port of the DC-to-DC converter 100 may also be connected to other converters and receive the input voltage Vin transmitted by the preceding converter, and the output port of the DC-to-DC converter 100 may also be connected to other converters and output the output voltage Vo to the subsequent converter, and the present disclosure is not limited thereto.

As shown in FIG. 1, the resonant tank 30 includes a transformer TR, a first resonant capacitor Cr1, and a resonant inductor Lr. The transformer TR includes a primary-side winding and a secondary-side winding. The primary-side circuit 10 is electrically connected between the input port and the primary-side winding of the transformer TR, and the secondary-side circuit 20 is electrically connected between the secondary-side winding of the transformer TR and the output port. The first resonant capacitor Cr1 is electrically connected between the primary-side circuit 10 and the primary-side winding of the transformer TR. Specifically, for example, the first resonant capacitor Cr1 is connected between a connection midpoint N1 in the first switch bridge arm 11 and one end of the primary-side winding of the transformer TR or between a connection midpoint N2 in the second switch bridge arm 12 and one end of the primary-side winding of the transformer TR. The resonant inductor Lr is electrically connected between the primary-side circuit 10 and the primary-side winding of the transformer TR. Specifically, for example, the resonant inductor Lr is connected between the connection midpoint N1 in the first switch bridge arm 11 and one end of the primary-side winding of the transformer TR or between the connection midpoint N2 in the second switch bridge arm 12 and one end of the primary-side winding of the transformer TR. Under such a structure, the resonant inductor Lr and the first resonant capacitor Cr1 of the resonant tank 30 and a magnetizing inductance of the transformer TR constitute an LLC resonant tank. The resonant inductor Lr is, for example, a leakage inductance of the transformer TR or an external inductor, which is not limited by the present disclosure.

The primary-side circuit 10 includes a first switch bridge arm 11 and a second switch bridge arm 12 connected in parallel. The secondary-side circuit 20 includes a third switch bridge arm 21 and a fourth switch bridge arm 22 connected in parallel. The first switch bridge arm 11 includes a first upper switch Q1 and a first lower switch Q3 connected in series; the second switch bridge arm 12 includes a second upper switch Q2 and a second lower switch Q4 connected in series; the third switch bridge arm 21 includes a third upper switch Q5 and a third lower switch Q7 connected in series; the fourth switch bridge arm 22 includes a fourth upper switch Q6 and a fourth lower switch Q8 connected in series. The connection midpoint N1 between the first upper switch Q1 and the first lower switch Q3 and the connection midpoint N2 between the second upper switch Q2 and the second lower switch Q4 are connected to the two ends of the primary-side winding of the transformer TR; the connection midpoint N3 between the third upper switch Q5 and the third lower switch Q7 and the connection midpoint N4 between the fourth upper switch Q6 and the fourth lower switch Q8 are connected to the two ends of the secondary-side winding of the transformer TR. In one embodiment, the resonant tank 30 further includes a second resonant capacitor Cr2. The second resonant capacitor Cr2 is electrically connected between the secondary-side circuit 20 and the secondary-side winding of the transformer TR. Specifically, for example, the second resonant capacitor Cr2 is connected between the connection midpoint N3 in the third switch bridge arm 21 and one end of the secondary-side winding of the transformer TR or between the connection midpoint N4 in the fourth switch bridge arm 22 and one end of the secondary-side winding of the transformer TR. Under such a structure, the resonant inductor Lr, the first resonant capacitor Cr1, and the second resonant capacitor Cr2 of the resonant tank 30 and a magnetizing inductance of the transformer TR constitute a CLLC resonant tank. The resonant tank 30 in the present disclosure may also be other resonant tanks except the LLC resonant tank and the CLLC resonant tank mentioned above, and the present disclosure is not limited thereto.

In some embodiments, the DC-to-DC converter 100 further includes an input capacitor unit Cin and an output capacitor unit Cout. The input capacitor unit Cin is electrically connected between the input port and the primary-side circuit 10, and is connected to the first switch bridge arm 11 and the second switch bridge arm 12 in parallel. The input capacitor unit Cin may be a single capacitor component, or it may be composed of multiple capacitor components connected in series, in parallel, or in series-parallel hybrid connection. The output capacitor unit Cout is electrically connected between the output port and the secondary-side circuit 20, and is connected to the third switch bridge arm 21 and the fourth switch bridge arm 22 in parallel. Similarly, the output capacitor unit Cout may be a single capacitor component, or it may be composed of multiple capacitor components connected in series, in parallel, or in series-parallel hybrid connection, and the present disclosure is not limited thereto.

In order to reduce the output ripple, the present disclosure proposes a phase shift control method applied to the above-mentioned DC-to-DC converter 100. The control method adopts two control strategies: frequency modulation control and phase shift control. In particular, the phase shift control strategies, for example, include PS (phase shift) applied to the second switch bridge arm 12, LT (lead time) applied to the third switch bridge arm 21 and DT (delay time) applied to the fourth switch bridge arm 22. The gain of the DC-to-DC converter 100 is changed by combining the phase shift control strategy and the frequency modulation control strategy. The control method can prevent the DC-to-DC converter 100 (such as LLC circuit, CLLC circuit, etc.) from entering the burst mode under light load, and can make it work in the continuous mode, thereby solving the problem of excessive output ripple caused by the burst mode. At the same time, the control method also balances the light load efficiency.

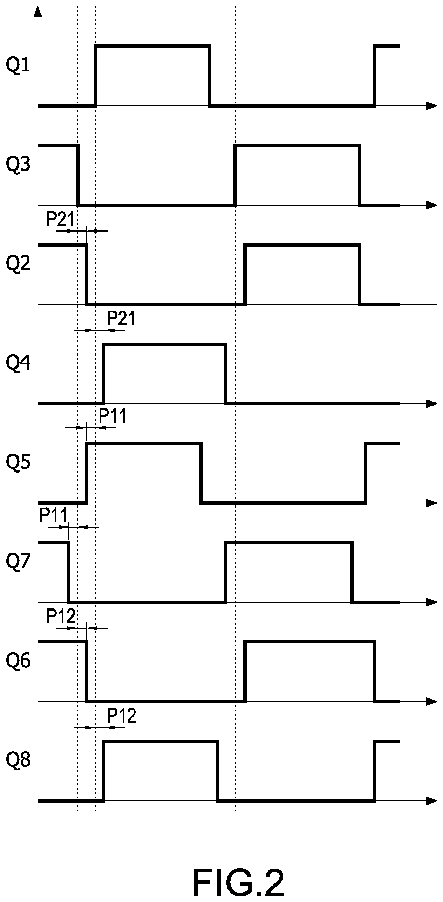

Please refer to FIG. 2, which shows a schematic diagram of control signals for a phase shift control according to the present disclosure. The DC-to-DC converter 100 includes four switch bridge arms (for example, the first to fourth switch bridge arms from left to right in FIG. 1). Taking the first switch bridge arm 11 on the primary side as a reference, but not limiting the present disclosure, the phase shifting of the driving signals on the other three switch bridge arms can change the work modes and gain of the DC-to-DC converter 100, thereby preventing the DC-to-DC converter 100 from entering the burst mode under light load and reducing the output ripple. In particular, PS (phase shift) is applied to the second switch bridge arm 12, which lags the first switch bridge arm 11; LT (lead time) is applied to the third switch bridge arm 21, which leads the first switch bridge arm 11; DT (delay time) is applied to the fourth switch bridge arm 22, which lags the first switch bridge arm 11.

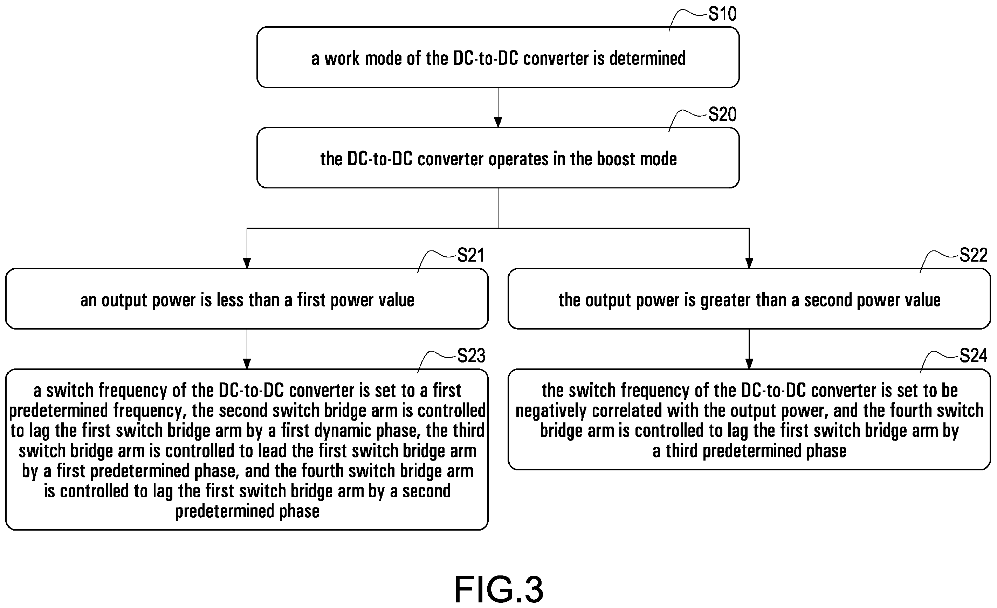

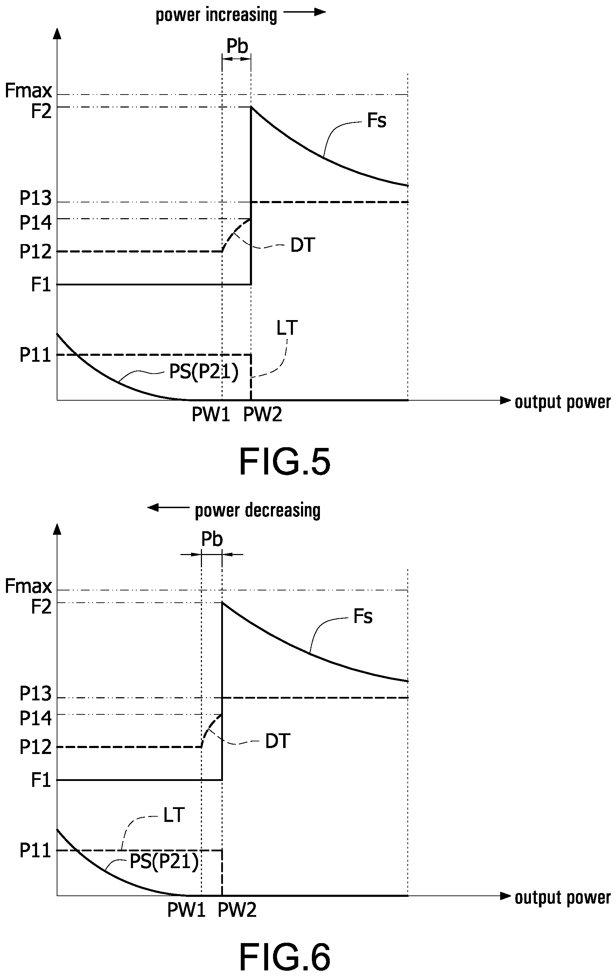

Please refer to FIG. 3, which shows a flowchart of a phase shift control method for determining whether the DC-to-DC converter operates in a boost mode according to the present disclosure. The phase shift control method includes steps as follows. First, a work mode of the DC-to-DC converter 100 is determined (step S10). Please refer to FIG. 5 and FIG. 6, which respectively show schematic diagrams of the phase shift control of increasing and decreasing power when the DC-to-DC converter operates in the boost mode according to the present disclosure.

Afterward, when it is determined that the DC-to-DC converter 100 operates in the boost mode (step S20) and an output power is less than a first power value (step S21), a switch frequency Fs of the DC-to-DC converter 100 is set to a first predetermined frequency F1, the second switch bridge arm 12 is controlled to lag the first switch bridge arm 11 by a first dynamic phase P21, the third switch bridge arm 21 is controlled to lead the first switch bridge arm 11 by a first predetermined phase P11, and the fourth switch bridge arm 22 is controlled to lag the first switch bridge arm 11 by a second predetermined phase P12 (step S23). In particular, the first dynamic phase P21 is negatively correlated with the output power.

Furthermore, when it is determined that the DC-to-DC converter 100 operates in the boost mode (step S20) and the output power is greater than a second power value (step S22), the switch frequency Fs of the DC-to-DC converter 100 is set to be negatively correlated with the output power, and the fourth switch bridge arm 22 is controlled to lag the first switch bridge arm 11 by a third predetermined phase P13 (step S24). In particular, the second power value PW2 is greater than the first power value PW1.

When the DC-to-DC converter 100 operates in the boost mode, the maximum frequency of the DC-to-DC converter 100 is set to a maximum frequency limit Fmax, and an intermediate frequency Fmid of the DC-to-DC converter 100, a maximum phase shift PS_max of the second switch bridge arm 12, and different DT values (such as the second predetermined phase and the third predetermined phase) applied to the fourth switch bridge arm 22 are set. In particular, the maximum frequency limit Fmax, the intermediate frequency Fmid, the maximum phase shift PS_max, and different DT values may be obtained in advance through testing and recorded in software or in a control unit of the DC-to-DC converter 100.

When the output power of the DC-to-DC converter 100 is less than the second power value PW2, the switch frequency Fs of the DC-to-DC converter 100 is kept at the first predetermined frequency F1, and the LT value of the third switch bridge arm 21 is kept at the first predetermined phase P11, and the PS value (the first dynamic phase P21) of the second switch bridge arm 12 and the DT value of the fourth switch bridge arm 22 are adjusted by single variable. That is, when the PS value of the second switch bridge arm 12 changes, the DT value of the fourth switch bridge arm 22 is kept unchanged at the second predetermined phase P12 (corresponding to the period when the output power is less than the first power value PW1), and after the PS value of the second switch bridge arm 12 changes to 0, the DT value of the fourth switch bridge arm 22 is closed-loop adjusted (corresponding to the period when the output power is greater than the first power value PW1 and less than the second power value PW2, such as a third stage later). In particular, the change of the DT value of the fourth switch bridge arm 22 can be calculated by the closed-loop period change. In addition, the closed-loop adjusted PS value can meet the gain requirement of the DC-to-DC converter 100, wherein the first dynamic phase P21 is not greater than the maximum phase shift value PSMax.

When the output power of the DC-to-DC converter 100 is greater than the second power value PW2, the PS value of the second switch bridge arm 12 is equal to 0, the LT value of the third switch bridge arm 21 is equal to 0, and the DT value of the fourth switch bridge arm 22 keeps unchanged at the third predetermined phase P13. At the same time, the switch frequency Fs of the DC-to-DC converter 100 is closed-loop adjusted, wherein the third predetermined phase P13 is greater than the second predetermined phase P12.

Therefore, for the control of the boost mode, this control method has at least two stages of parameter changes. The output power being less than the first power value PW1 corresponds to the first stage, and the output power being greater than the second power value PW2 corresponds to the second stage. In the first stage, the closed-loop adjustment of the PS value of the second switch bridge arm 12 can reduce the gain at light load, ensuring that the DC-to-DC converter 100 does not enter the burst mode, and the DT value (the second predetermined phase P12) of the fourth switch bridge arm 22 is set for the gain requirement of the boost mode. The LT value (the first predetermined phase P11) of the third switch bridge arm 21 is set to achieve soft switching in the boost mode. Furthermore, high efficiency at light load can be achieved by setting the switch frequency Fs in the first stage to a first predetermined frequency F1 (for example, the intermediate frequency Fmid), configuring the DT value of the fourth switch bridge 22 and the LT value of the third switch bridge 21, and implementing the closed-loop adjustment of the PS value of the second switch bridge 12. In addition, the closed-loop adjustment of the switch frequency Fs in the second stage and the open-loop control of the DT value (third predetermined phase P13) of the fourth switch bridge arm 22 can jointly adjust the gain of the DC-to-DC converter 100, which is consistent with the normal LLC mode, thereby ensuring high power stability. In some embodiments, in order to simplify software control, a single variable is selected for closed-loop adjustment in each stage, while other parameters are open-loop controlled.

When the DC-to-DC converter 100 outputs different voltages, all of the different voltages correspond to a power value Pburst when entering the burst mode during the conventional burst mode control. Therefore, in some embodiments of the present disclosure, when the output power gradually increases and is equal to the first power value PW1, the first power value PW1 may be the power value Pburst, and the second power value PW2 can be a value exceeding the power value Pburst by a certain amount (in a typical embodiment, "a certain amount" refers to 500W, but this is not used to limit the present disclosure), that is, the second power value PW2 is equal to the sum of the power value Pburst and the certain amount. When the output power gradually decreases and is equal to the second power value PW2, the second power value PW2 may be the power value Pburst. Please refer to FIG. 5 and FIG. 6, when the DC-to-DC converter 100 operates in the boost mode, the value of the second power value PW2 (the sum of the power value Pburst and the certain amount) when the output power gradually increases (shown in FIG. 5) is equal to the sum of a buffer power (the certain amount) and the value of the second power value PW2 (power value Pburst) when the output power gradually decreases (shown in FIG. 6). In particular, the power value Pburst may be obtained in advance through testing and recorded in software or a control unit of the DC-to-DC converter 100.

In some embodiments, when the DC-to-DC converter 100 operates in the boost mode, "the first dynamic phase P21 is negatively correlated with the output power" includes: controlling the first dynamic phase P21 to gradually decrease to 0 as the output power increases, and controlling the first dynamic phase P21 to gradually increase from 0 as the output power decreases. Specifically, when the DC-to-DC converter 100 operates in the boost mode and the output power gradually increases and is less than the first power value PW1, the first dynamic phase P21 is controlled to gradually decrease from the maximum phase shift PS_max to 0 as the output power increases. When the DC-to-DC converter 100 operates in the boost mode and the output power gradually decreases and is less than the first power value PW1, the first dynamic phase P21 is controlled to gradually increase from 0 to, for example, the maximum phase shift PS_max as the output power decreases.

In some embodiments, when the DC-to-DC converter 100 operates in the boost mode, "the switch frequency Fs of the DC-to-DC converter 100 is set to be negatively correlated with the output power" includes: controlling the switch frequency Fs of the DC-to-DC converter 100 to gradually decrease from a second predetermined frequency F2 as the output power increases, and controlling the switch frequency Fs of the DC-to-DC converter 100 to gradually increase to the second predetermined frequency F2 as the output power decreases. Specifically, when the DC-to-DC converter 100 operates in the boost mode and the output power gradually increases and is greater than the second power value PW2, the switch frequency Fs is controlled to gradually decrease from the second predetermined frequency F2 as the output power increases. When the DC-to-DC converter 100 operates in the boost mode and the output power gradually decreases and is greater than the second power value PW2, the switch frequency Fs is controlled to gradually increase to the second predetermined frequency F2 as the output power decreases.

According to the above-mentioned phase shift control method and principle, how to implement it in the switch bridge arm of the DC-to-DC converter 100 will be described in more detail as follows. Please refer to FIG. 1, taking the first switch bridge arm 11 of the primary side as a reference, a first driving signal of the first upper switch Q1 and a third driving signal of the first lower switch Q3 are complementary to each other. Incidentally, the "complementary to each other" here is not a strict complimentary, it can also include setting a dead time to prevent all of the first upper switch Q1and the first lower switch Q3 from being turned on simultaneously. Furthermore, the first upper switch Q1 and the first lower switch Q3 of the first switch bridge arm 11 are both turned off, which is also included in the complementary mentioned here.

In particular, "the second switch bridge arm 12 is controlled to lag the first switch bridge arm 11 by a first dynamic phase P21" includes: controlling a second driving signal of the second upper switch Q2 of the second switch bridge arm 12 to lag the third driving signal of the first lower switch Q3 of the first switch bridge arm 11 by the first dynamic phase P21, and controlling a fourth driving signal of the second lower switch Q4 of the second switch bridge arm 12 to lag the first driving signal of the first upper switch Q1 of the first switch bridge arm 11 by the first dynamic phase P21.

In particular, "the third switch bridge arm 21 is controlled to lead the first switch bridge arm 11 by a first predetermined phase P11" includes: controlling a fifth driving signal of the third upper switch Q5 of the third switch bridge arm 21 to lead the first driving signal of the first upper switch Q1 of the first switch bridge arm 11 by the first predetermined phase P11, and controlling a seventh driving signal of the third lower switch Q7 of the third switch bridge arm 21 to lead the third driving signal of the first lower switch Q3 of the first switch bridge arm 11 by the first predetermined phase P11.

In particular, "the fourth switch bridge arm 22 is controlled to lag the first switch bridge arm 11 by a second predetermined phase P12" includes: controlling a sixth driving signal of the fourth upper switch Q6 of the fourth switch bridge arm 22 to lag the third driving signal of the first lower switch Q3 of the first switch bridge arm 11 by the second predetermined phase P12, and controlling an eighth driving signal of the fourth lower switch Q8 of the fourth switch bridge arm 22 to lag the first driving signal of the first upper switch Q1 of the first switch bridge arm 11 by the second predetermined phase P12.

In particular, "fourth switch bridge arm 22 is controlled to lag the first switch bridge arm 11 by a third predetermined phase P13" includes: controlling the sixth driving signal of the fourth upper switch Q6 of the fourth switch bridge arm 22 to lag the third driving signal of the first lower switch Q3 of the first switch bridge arm 11 by the third predetermined phase P13, and controlling the eighth driving signal of the fourth lower switch Q8 of the fourth switch bridge arm 22 to lag the first driving signal of the first upper switch Q1 of the first switch bridge arm 11 by the third predetermined phase P13.

In addition, please refer to FIG. 5, this control method further has a third stage. When the output power of the DC-to-DC converter 100 increases from the first power value PW1 to the second power value PW2, a phase that the fourth switch bridge arm 22 lags the first switch bridge arm 11 is controlled to gradually increase from the second predetermined phase P12 to the fourth predetermined phase P14, the switch frequency Fs of the DC-to-DC converter 100 is controlled to be the first predetermined frequency F1, and the third switch bridge arm 21 is controlled to lead the first switch bridge arm 11 by the first predetermined phase P11.

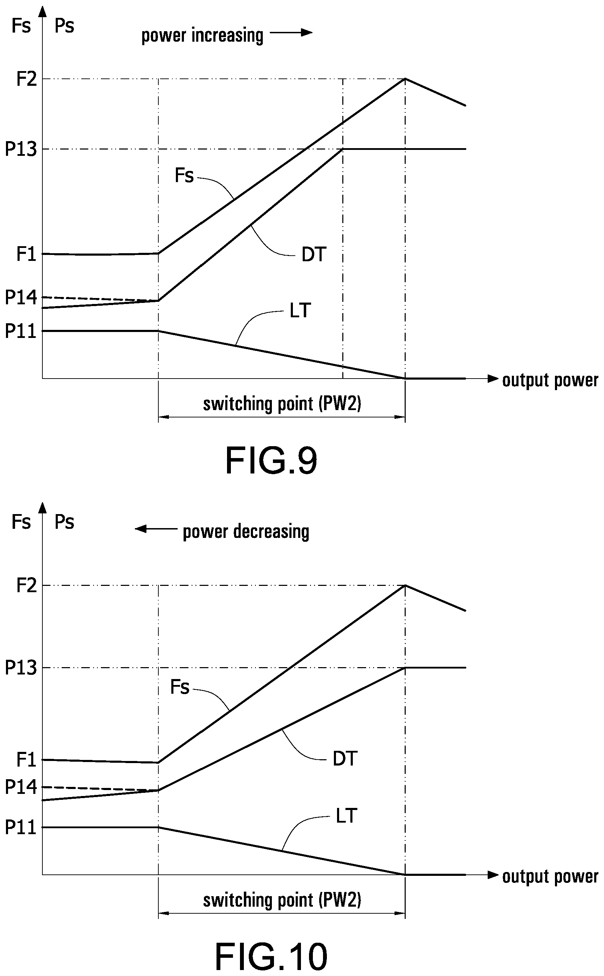

Furthermore, please refer to FIG. 5 and FIG. 9 showing the widened switching point to clearly demonstrate the changes in switch frequency Fs, DT value, and LT value, when the output power of the DC-to-DC converter 100 gradually increases and is equal to the second power value PW2, a phase that the fourth switch bridge arm 22 lags the first switch bridge arm 11 is controlled to increase from the fourth predetermined phase P14 to the third predetermined phase P13, the switch frequency Fs of the DC-to-DC converter 100 is controlled to increase from the first predetermined frequency F1 to the second predetermined frequency F2, the LT value of the third switch bridge arm 21 is controlled to linearly decrease from the first predetermined phase P11 to 0, and a phase change rate that the fourth switch bridge arm 22 lags the first switch bridge arm 11 is controlled to be greater than a change rate of the switch frequency Fs of the DC-to-DC converter 100. Reaching the third predetermined phase P13 for the increase of the DT value of the fourth switch bridge arm 22 and reaching the second predetermined frequency F2 for the increase of the switch frequency Fs are not synchronized, and the former is realized before the latter. Incidentally, during the entire switching prosses of the switch frequency Fs and the DT value of the fourth switch bridge 22, smooth switching is ensured by independently constraining their respective rates of change. Incidentally, as mentioned above, "the output power of the DC-to-DC converter 100 is equal to the second power value PW2", the entire switching process (the DT value of the fourth switch bridge arm 22 increases from the fourth predetermined phase P14 to the third predetermined phase P13, the LT value of the third switch bridge arm 21 linearly decreases from the first predetermined phase P11 to 0, and the switch frequency Fs of the DC-to-DC converter 100 increases from the first predetermined frequency F1 to the second predetermined frequency F2) is basically completed in microseconds or milliseconds.

In addition, please refer to FIG. 6, this control method further has a third stage. When the output power of the DC-to-DC converter 100 decreases from the second power value PW2 to the first power value PW1, a phase that the fourth switch bridge arm 22 lags the first switch bridge arm 11 is controlled to gradually increase from the fourth predetermined phase P14 to the second predetermined phase P12, the switch frequency Fs of the DC-to-DC converter 100 is controlled to be the first predetermined frequency F1, and the third switch bridge arm 21 is controlled to lead the first switch bridge arm 11 by the first predetermined phase P11.

Furthermore, please refer to FIG. 6 and FIG. 10 showing the widened switching point to clearly demonstrate the changes in switch frequency Fs, DT value, and LT value, when the output power of the DC-to-DC converter 100 gradually decreases and is equal to the second power value PW2, a phase that the fourth switch bridge arm 22 lags the first switch bridge arm 11 is controlled to decrease from the third predetermined phase P13 to the fourth predetermined phase P14, the switch frequency Fs of the DC-to-DC converter 100 is controlled to decrease from the second predetermined frequency F2 to the first predetermined frequency F1, and the LT value of the third switch bridge arm 21 is controlled to linearly increase from 0 to the first predetermined phase P11. Furthermore, a phase change rate that the fourth switch bridge arm 22 lags the first switch bridge arm 11 is controlled to be less than or equal to a phase change rate of the switch frequency Fs of the DC-to-DC converter 100. Reaching the fourth predetermined phase P14 for the decrease of the DT value of the fourth switch bridge arm 22 and reaching the first predetermined frequency F1 for the decrease of the switch frequency Fs are synchronized. Incidentally, as mentioned above, "the output power of the DC-to-DC converter 100 is equal to the second power value PW2", the entire switching process (the DT value of the fourth switch bridge arm 22 decreases from the third predetermined phase P13 to the fourth predetermined phase P14, the LT value of the third switch bridge arm 21 linearly increases from 0 to the first predetermined phase P11, and the switch frequency Fs of the DC-to-DC converter 100 decreases from the second predetermined frequency F2 to the first predetermined frequency F1) is basically completed in microseconds or milliseconds.

In order to ensure the gain requirement of the DC-to-DC converter 100 during the switching process, in the mode of increasing output power, the adjustment rate of the DT value of the fourth switch bridge arm 22 is faster than the adjustment rate of the switch frequency Fs so that the gain of the DC-to-DC converter 100 meets the boost requirement at any time. Similarly, in the mode of decreasing output power, the adjustment rate of the DT value of the fourth switch bridge arm 22 is synchronized or slower than the adjustment rate of the switch frequency Fs. Incidentally, during the entire switching prosses of the switch frequency Fs and the DT value of the fourth switch bridge arm 22, smooth switching is ensured by independently constraining their respective rates of change.

Incidentally, the first predetermined frequency F1, the second predetermined frequency F2, the first predetermined phase P11, the second predetermined phase P12, the third predetermined phase P13, the fourth predetermined phase P14, and the first dynamic phase P21 are determined according to the output power of the DC-to-DC converter 100; the first power value PW1 and the second power value PW2 are determined according to the output voltage Vo of the DC-to-DC converter 100, and the second predetermined frequency F2 is less than or equal to the maximum frequency limit Fmax of the DC-to-DC converter 100.

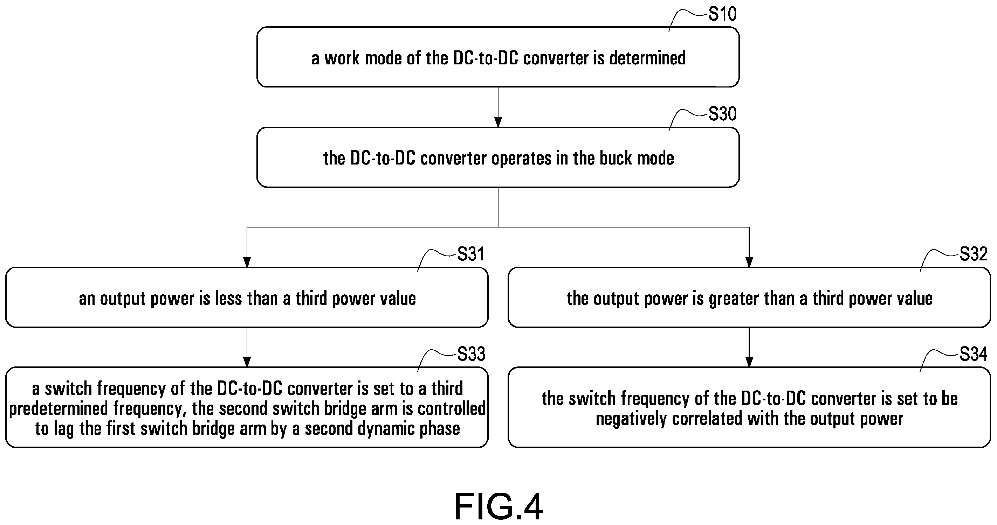

Please refer to FIG. 4, which shows a flowchart of the phase shift control method for determining that the DC-to-DC converter operates in a buck mode according to the present disclosure. The phase shift control method includes steps as follows. First, a work mode of the DC-to-DC converter 100 is determined (step S10).

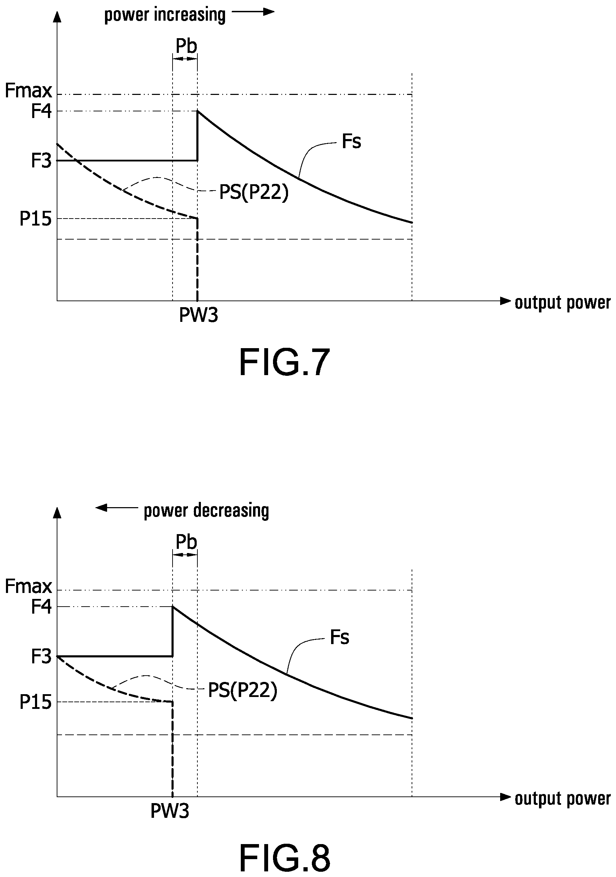

Please refer to FIG. 7 and FIG. 8, which respectively show schematic diagrams of the phase shift control of increasing and decreasing power when the DC-to-DC converter operates in the buck mode according to the present disclosure. Afterward, a switch frequency Fs of the DC-to-DC converter 100 is set to a third predetermined frequency F3, the second switch bridge arm 12 is controlled to lag the first switch bridge arm 11 by a second dynamic phase P22 (step S33) when it is to determined that the DC-to-DC converter 100 operate in the buck mode (step S30) and an output power is less than a third power value (step S31). In particular, the second dynamic phase P22 is negatively correlated with the output power. Furthermore, the switch frequency Fs of the DC-to-DC converter 100 is set to be negatively correlated with the output power (S34) when it is to determine that the DC-to-DC converter 100 operates in the buck mode (step S30) and the output power is greater than the third power value (step S32).

When the DC-to-DC converter 100 operates in the buck mode, the maximum frequency of the DC-to-DC converter 100 is set to a maximum frequency limit Fmax, and an intermediate frequency Fmid of the DC-to-DC converter 100, and a maximum phase shift PS_max of the second switch bridge arm 12 are set. In particular, the maximum frequency limit Fmax, the intermediate frequency Fmid, and the maximum phase shift PS_max may be obtained in advance through testing and recorded in software or in a control unit of the DC-to-DC converter 100.

When the output power of the DC-to-DC converter 100 is less than the third power value PW3, the switch frequency Fs of the DC-to-DC converter 100 is kept at a fixed value (i.e., the third predetermined frequency F3), for example the intermediate frequency Fmid, and the PS value (i.e., the second dynamic phase P22) is closed-loop adjusted so as to meet the gain requirement of the DC-to-DC converter 100. In particular, the second dynamic phase P22 is not greater than the maximum phase shift value PSMax.

When the output power is greater than the third power value PW3, the second dynamic phase P22 is 0, and the switch frequency Fs of the DC-to-DC converter 100 is closed-loop adjusted to meet the gain requirement of the DC-to-DC converter 100. In particular, the maximum value of the switch frequency Fs is the maximum frequency limit Fmax.

Therefore, for the control of the buck mode, the control method has two stages of parameter changes. The output power being less than the third power value PW3 corresponds to the first stage, and the output power being greater than the third power value PW3 corresponds to the second stage. In the first stage, the closed-loop adjustment of the PS value of the second switch bridge arm 12 can reduce the gain at light load, ensuring that the DC-to-DC converter 100 does not enter the burst mode. Furthermore, high efficiency at light load can be achieved by selecting the intermediate frequency (i.e., the third predetermined frequency F3) in this stage and adjusting the PS value. Furthermore, the single closed-loop adjustment of the switch frequency Fs in the second stage to control the gain is consistent with the normal LLC mode, which can ensure the stability of high power. In some embodiments, in order to simplify the software control, a single variable may be selected for closed-loop adjustment in each stage, and other parameters are open-loop controlled. For example, when the output power gradually decreases, the load changes and the DC-to-DC converter 100 first performs the closed-loop adjustment on the switch frequency Fs to meet the gain. However, when the switch frequency Fs rises to, for example, the maximum frequency Fmax, the gain of the DC-to-DC converter 100 is still greater than the required gain, and then the PS value is increased through the closed-loop adjustment to reduce the gain of the DC-to-DC converter 100.

When the DC-to-DC converter 100 outputs different voltages, all of the different voltages correspond to a power value Pburst when entering the burst mode during the conventional burst mode control. Therefore, in some embodiments of the present disclosure, when the output power gradually increases and is equal to the third power value PW3, the third power value PW3 may be a value exceeding the power value Pburst by a certain amount (in a typical embodiment, "a certain amount" refers to 500W, but this is not used to limit the present disclosure), that is, the third power value PW3 is equal to the sum of the power value Pburst and the certain amount. When the output power gradually decreases and is equal to the third power value PW3, the third power value PW3 may be the power value Pburst. Please refer to FIG. 7 and FIG. 8, when the DC-to-DC converter 100 operates in the buck mode, the value of the third power value PW3 (the sum of the power value Pburst and the certain amount) when the output power gradually increases (shown in FIG. 7) is equal to the sum of a buffer power (the certain amount) and the value of the third power value PW3 (power value Pburst) when the output power gradually decreases (shown in FIG. 8). In particular, the power value Pburst may be obtained in advance through testing and recorded in software or a control unit of the DC-to-DC converter 100.

In some embodiments, when the DC-to-DC converter 100 operates in the buck mode, "the second dynamic phase P22 is negatively correlated with the output power" includes: controlling the second dynamic phase P22 to gradually decrease to a fifth predetermined phase P15 as the output power increases, and controlling the second dynamic phase P22 to gradually increase from the fifth predetermined phase P15 as the output power decreases. In particular, the fifth predetermined phase P15 is not 0. Specifically, when the DC-to-DC converter 100 operates in the buck mode and the output power gradually increases and is less than the third power value PW3, the second dynamic phase P22 is controlled to gradually decrease from, for example, the maximum phase shift PS_max to the fifth predetermined phase P15 as the output power increases. When the DC-to-DC converter 100 operates in the buck mode and the output power gradually decreases and is less than the third power value PW3, the second dynamic phase P22 is controlled to gradually increase from the fifth predetermined phase P15 to, for example, the maximum phase shift PS_max as the output power decreases. In particular, the fifth predetermined phase P15 is an arbitrary value and not equal to 0, and its value may be determined according to the output power of the DC-to-DC converter 100.

In some embodiments, when the DC-to-DC converter 100 operates in the buck mode, "the switch frequency Fs of the DC-to-DC converter 100 is set to be negatively correlated with the output power" includes: controlling the switch frequency Fs of the DC-to-DC converter 100 to gradually decrease as the output power increases, and controlling the switch frequency Fs of the DC-to-DC converter 100 to gradually increase as the output power decreases. Specifically, when the DC-to-DC converter 100 operates in the buck mode and the output power gradually increases and is greater than the third power value PW3, the switch frequency Fs is controlled to gradually decrease as the output power increases. When the DC-to-DC converter 100 operates in the buck mode and the output power gradually decreases and is greater than the third power value PW3, the switch frequency Fs is controlled to gradually increase as the output power decreases.

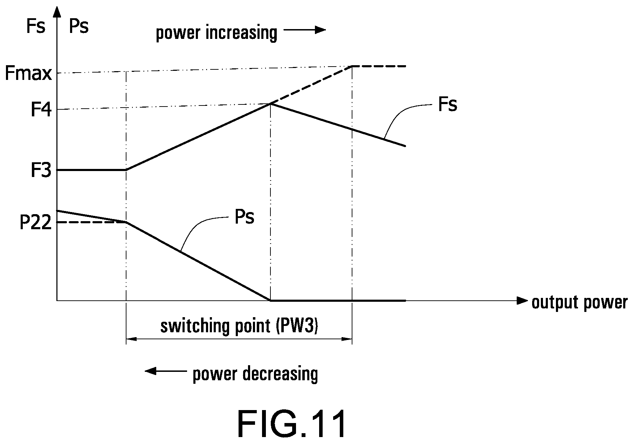

In addition, please refer to FIG. 7 and FIG. 11 showing the widened switching point to clearly demonstrate the changes in switch frequency Fs, DT value, and LT value, when the output power of the DC-to-DC converter 100 gradually increases and is equal to the third power value PW3, the switch frequency Fs of the DC-to-DC converter 100 is controlled to increase from the third predetermined frequency F3 to the fourth predetermined frequency F4 as the second dynamic phase P22 decreases to 0, and then the switch frequency Fs of the DC-to-DC converter 100 is controlled to gradually decrease from the fourth predetermined frequency F4. In particular, the fourth predetermined frequency F4 is less than the maximum frequency limit Fmax. Incidentally, as mentioned above, "the output power of the DC-to-DC converter 100 is equal to the third power value PW3", the entire switching process (the second dynamic phase P22 decreases to 0 and the switch frequency Fs increases from the third predetermined frequency F3 to the fourth predetermined frequency F4 and then gradually decreases) is basically completed in microseconds or milliseconds.

In addition, please refer to FIG. 8 and FIG. 11, when the output power of the DC-to-DC converter 100 gradually decreases and is equal to the third power value PW3, the switch frequency Fs of the DC-to-DC converter 100 is controlled to gradually increase to the fourth predetermined frequency F4, and then the switch frequency Fs of the DC-to-DC converter 100 is controlled to decrease from the fourth predetermined frequency F4 to the third predetermined frequency F3 as the second dynamic phase P22 increases from 0. In particular, the fourth predetermined frequency F4 is less than the maximum frequency limit Fmax. Incidentally, as mentioned above, "the output power of the DC-to-DC converter 100 is equal to the third power value PW3", the entire switching process (the second dynamic phase P22 increases from 0 and the switch frequency Fs gradually increases to the fourth predetermined frequency F4 and then decreases to the third predetermined frequency F3) is basically completed in microseconds or milliseconds.

Incidentally, the third power value PW3 is determined according to the output voltage Vo of the DC-to-DC converter 100; the third predetermined frequency F3, the fourth predetermined frequency F4, and the fifth predetermined phase P15 are determined according to the output power of the DC-to-DC converter 100.

Incidentally, during the entire switching prosses of the switch frequency Fs and the PS value (i.e., the second dynamic phase P22) of the second switch bridge arm 12, smooth switching is ensured by independently constraining their respective rates of change.

Incidentally, due to the selection of the switching point (e.g., the third power value PW3), when switching, the DC-to-DC converter 100 needs the PS value of the second switch bridge arm 12 to be 0 when the DC-to-DC converter 100 operates at the maximum frequency. Therefore, in the mode of increasing output power, the maximum frequency limit of the DC-to-DC converter 100 is increased from the intermediate frequency Fmid to the maximum frequency limit Fmax. The actual switch frequency Fs of the DC-to-DC converter 100 initially increases with the maximum frequency limit. Since the required gain increases at this time, in order to meet the gain requirement, the PS value of the second switch bridge arm 12 synchronously decreases. When the PS value of the second switch bridge arm 12 decreases to 0, the switch frequency Fs decreases as the gain increases.

Similarly, in the mode of decreasing output power, the maximum frequency limit of the DC-to-DC converter 100 is decreased from the maximum frequency limit Fmax to the intermediate frequency Fmid. The actual switch frequency Fs of the DC-to-DC converter 100 gradually increases as the required gain decreases until it reaches the maximum frequency limit Fmax, at which time the PS value of the second switch bridge arm 12 starts to increase from 0. When the switch frequency Fs decreases to the intermediate frequency Fmid, the PS value of the second switch bridge arm 12 also completes the switching.

In summary, the present disclosure has the following features and advantages. The present disclosure proposes a phase shift control method and a DC-to-DC converter 100, which changes the gain of the DC-to-DC converter 100 by combining the phase shift control strategy and the frequency modulation control strategy. The phase shift control method can prevent the DC-to-DC converter 100 (such as LLC circuit, CLLC circuit, etc.) from entering the burst mode under light load, and can make it work in the continuous mode, thereby solving the problem of excessive output ripple caused by the burst mode. At the same time, the control method also takes into account the light load efficiency.

## Claims

1. A phase shift control method for a DC-to-DC converter (100), the DC-to-DC converter (100) comprising a primary-side circuit (10), a secondary-side circuit (20), and a resonant tank (30) coupled between the primary-side circuit (10) and the secondary-side circuit (20), wherein the primary-side circuit (10) comprises a first switch bridge arm (11) and a second switch bridge arm (12), and the secondary-side circuit (20) comprises a third switch bridge arm (21) and a fourth switch bridge arm (22), **characterized in that** the phase shift control method comprising:
determining a work mode of the DC-to-DC converter (100),
when the DC-to-DC converter (100) operates in a boost mode and an output power is less than a first power value (PW1), setting a switch frequency (Fs) of the DC-to-DC converter (100) to a first predetermined frequency (F1), controlling the second switch bridge arm (12) to lag the first switch bridge arm (11) by a first dynamic phase (P21), controlling the third switch bridge arm (21) to lead the first switch bridge arm (11) by a first predetermined phase (P11), controlling the fourth switch bridge arm (22) to lag the first switch bridge arm (11) by a second predetermined phase (P12), wherein the first dynamic phase (P21) is negatively correlated with the output power, and
when the DC-to-DC converter (100) operates in the boost mode and the output power is greater than a second power value (PW2), setting the switch frequency (Fs) of the DC-to-DC converter (100) to be negatively correlated with the output power, and controlling the fourth switch bridge arm (22) to lag the first switch bridge arm (11) by a third predetermined phase (P13), wherein the second power value (PW2) is greater than the first power value (PW1).

2. The phase shift control method as claimed in claim 1, wherein "the first dynamic phase (P21) is negatively correlated with the output power" comprises:
controlling the first dynamic phase (P21) to gradually decrease to 0 as the output power increases, and controlling the first dynamic phase (P21) to gradually increase from 0 as the output power decreases.

3. The phase shift control method as claimed in claim 1, wherein "setting the switch frequency (Fs) of the DC-to-DC converter (100) to be negatively correlated with the output power" comprises:
controlling the switch frequency (Fs) of the DC-to-DC converter (100) to gradually decrease from a second predetermined frequency (F2) as the output power increases, and controlling the switch frequency (Fs) of the DC-to-DC converter (100) to gradually increase to the second predetermined frequency (F2) as the output power decreases, wherein the second predetermined frequency (F2) is greater than the first predetermined frequency (F1).

4. The phase shift control method as claimed in claim 1, wherein the first switch bridge arm (11) comprises a first upper switch (Q1) and a first lower switch (Q3) connected in series, the second switch bridge arm (12) comprises a second upper switch (Q2) and a second lower switch (Q4) connected in series, the third switch bridge arm (21) comprises a third upper switch (Q5) and a third lower switch (Q7) connected in series, the fourth switch bridge arm (22) comprises a fourth upper switch (Q6) and a fourth lower switch (Q8) connected in series, wherein the first upper switch (Q1) and the first lower switch (Q3) are complementary to each other,
wherein "controlling the second switch bridge arm (12) to lag the first switch bridge arm (11) by a first dynamic phase (P21)" further comprises: controlling a second driving signal of the second upper switch (Q2) of the second switch bridge arm (12) to lag a third driving signal of the first lower switch (Q3) of the first switch bridge arm (11) by the first dynamic phase (P21), and controlling a fourth driving signal of the second lower switch (Q4) of the second switch bridge arm (12) to lag a first driving signal of the first upper switch (Q1) of the first switch bridge arm (11) by the first dynamic phase (P21),
wherein "controlling the third switch bridge arm (21) to lead the first switch bridge arm (11) by a first predetermined phase (P11)" further comprises: controlling a fifth driving signal of the third upper switch (Q5) of the third switch bridge arm (21) to lead the first driving signal of the first upper switch (Q1) of the first switch bridge arm (11) by the first predetermined phase (P11), and controlling a seventh driving signal of the third lower switch (Q7) of the third switch bridge arm (21) to lead the third driving signal of the first lower switch (Q3) of the first switch bridge arm (11) by the first predetermined phase (P11),
wherein "controlling the fourth switch bridge arm (22) to lag the first switch bridge arm (11) by a second predetermined phase (P12)" further comprises: controlling a sixth driving signal of the fourth upper switch (Q6) of the fourth switch bridge arm (22) to lag the third driving signal of the first lower switch (Q3) of the first switch bridge arm (11) by the second predetermined phase (P12), and controlling an eighth driving signal of the fourth lower switch (Q8) of the fourth switch bridge arm (22) to lag the first driving signal of the first upper switch (Q1) of the first switch bridge arm (11) by the second predetermined phase (P12),
wherein "controlling the fourth switch bridge arm (22) to lag the first switch bridge arm (11) by a third predetermined phase (P13)" further comprises: controlling the sixth driving signal of the fourth upper switch (Q6) of the fourth switch bridge arm (22) to lag the third driving signal of the first lower switch (Q3) of the first switch bridge arm (11) by the third predetermined phase (P13), and controlling the eighth driving signal of the fourth lower switch (Q8) of the fourth switch bridge arm (22) to lag the first driving signal of the first upper switch (Q1) of the first switch bridge arm (11) by the third predetermined phase (P13).

5. The phase shift control method as claimed in claim 1, further comprising:
when the output power of the DC-to-DC converter (100) increases from the first power value (PW1) to the second power value (PW2), controlling a phase that the fourth switch bridge arm (22) lags the first switch bridge arm (11) to gradually increase from the second predetermined phase (P12) to a fourth predetermined phase (P14), controlling the switch frequency (Fs) of the DC-to-DC converter (100) to the first predetermined frequency (F1), and controlling the third switch bridge arm (21) to lead the first switch bridge arm (11) by the first predetermined phase (P11).

6. The phase shift control method as claimed in claim 5, further comprising:
when the output power of the DC-to-DC converter (100) gradually increases and is equal to the second power value (PW2), controlling the phase that the fourth switch bridge arm (22) lags the first switch bridge arm (11) to increase from the fourth predetermined phase (P14) to the third predetermined phase (P13), controlling the switch frequency (Fs) of the DC-to-DC converter (100) to increase from the first predetermined frequency (F1) to the second predetermined frequency (F2), controlling a phase that the third switch bridge arm (21) leads the first switch bridge arm (11) to linearly decrease from the first predetermined phase (P11) to 0, and controlling a phase change rate that the fourth switch bridge arm (22) lags the first switch bridge arm (11) to be greater than a change rate of the switch frequency (Fs) of the DC-to-DC converter (100).

7. The phase shift control method as claimed in claim 1, further comprising:
when the output power of the DC-to-DC converter (100) decreases from the second power value (PW2) to the first power value (PW1), controlling a phase that the fourth switch bridge arm (22) lags the first switch bridge arm (11) to gradually decrease from the fourth predetermined phase (P14) to the second predetermined phase (P12), controlling the switch frequency (Fs) of the DC-to-DC converter (100) to the first predetermined frequency (F1), and controlling the third switch bridge arm (21) to lead the first switch bridge arm (11) by the first predetermined phase (P11).

8. The phase shift control method as claimed in claim 7, further comprising:
when the output power of the DC-to-DC converter (100) gradually decreases and is equal to the second power value (PW2), controlling the phase that the fourth switch bridge arm (22) lags the first switch bridge arm (11) to decrease from the third predetermined phase (P13) to the fourth predetermined phase (P14), controlling the switch frequency (Fs) of the DC-to-DC converter (100) to decrease from the second predetermined frequency (F2) to the first predetermined frequency (F1), controlling a phase that the third switch bridge arm (21) leads the first switch bridge arm (11) to linearly increase from 0 to the first predetermined phase (P11), and controlling a phase change rate that the fourth switch bridge arm (22) lags the first switch bridge arm (11) to be less than or equal to a phase change rate of the switch frequency (Fs) of the DC-to-DC converter (100).

9. The phase shift control method as claimed in claim 5 or claim 6, wherein the first predetermined frequency (F1), the second predetermined frequency (F2), the first predetermined phase (P11), the second predetermined phase (P12), the third predetermined phase (P13), the fourth predetermined phase (P14), and the first dynamic phase (P21) are determined according to the output power of the DC-to-DC converter (100); the first power value (PW1) and the second power value (PW2) are determined according to an output voltage (Vo) of the DC-to-DC converter (100), and the second predetermined frequency (F2) is less than or equal to a maximum frequency limit (Fmax) of the DC-to-DC converter (100).

10. The phase shift control method as claimed in claim 1, further comprising:
when the DC-to-DC converter (100) operates in a buck mode and the output power is less than a third power value (PW3), setting the switch frequency (Fs) of the DC-to-DC converter (100) to be a third predetermined frequency (F3), and controlling the second switch bridge arm (12) to lag the first switch bridge arm (11) by a second dynamic phase (P22), wherein the second dynamic phase (P22) is negatively correlated with the output power, and
when the DC-to-DC converter (100) operates in the buck mode and the output power is greater than the third power value (PW3), setting the switch frequency (Fs) of the DC-to-DC converter (100) to be negatively correlated with the output power.

11. The phase shift control method as claimed in claim 10, wherein "setting the second dynamic phase (P22) to be negatively correlated with the output power" comprises:
controlling the second dynamic phase (P22) gradually decreases to a fifth predetermined phase (P15) as the output power increases, and controlling the second dynamic phase (P22) gradually increases from the fifth predetermined phase (P15) as the output power decreases, wherein the fifth predetermined phase (P15) is not 0.

12. The phase shift control method as claimed in claim 10, wherein "setting the switch frequency (Fs) of the DC-to-DC converter (100) to be negatively correlated with the output power" comprises:
controlling the switch frequency (Fs) of the DC-to-DC converter (100) to gradually decrease as the output power increases, and controlling the switch frequency (Fs) of the DC-to-DC converter (100) to gradually increase as the output power decreases.

13. The phase shift control method as claimed in claim 10, further comprising:
when the output power of the DC-to-DC converter (100) gradually increases and is equal to the third power value (PW3), controlling the switch frequency (Fs) of the DC-to-DC converter (100) to increase from the third predetermined frequency (F3) to a fourth predetermined frequency (F4) as the second dynamic phase (P22) decreases to 0, and then controlling the switch frequency (Fs) of the DC-to-DC converter (100) to gradually decrease from the fourth predetermined frequency (F4).

14. The phase shift control method as claimed in claim 10, further comprising:
when the output power of the DC-to-DC converter (100) gradually decreases and is equal to the third power value (PW3), controlling the switch frequency (Fs) of the DC-to-DC converter (100) to gradually increase to a fourth predetermined frequency (F4), and then controlling the switch frequency (Fs) of the DC-to-DC converter (100) to decrease from the fourth predetermined frequency (F4) to the third predetermined frequency (F3) as the second dynamic phase (P22) increases from 0.

15. The phase shift control method as claimed in claim 13 or claim 14, wherein the third power value (P13) is determined according to an output voltage (Vo) of the DC-to-DC converter (100); the third predetermined frequency (F3), the fourth predetermined frequency (F4), and the fifth predetermined phase (P15) are determined according to the output power of the DC-to-DC converter (100), and the fourth predetermined frequency (F4) is less than or equal to a maximum frequency limit (Fmax) of the DC-to-DC converter (100).

16. The phase shift control method as claimed in claim 10, wherein
when the DC-to-DC converter (100) operates in the boost mode, a value of the second power value (PW2) when the output power gradually increases is equal to a sum of a buffer power and a value of the second power value (PW2) when the output power gradually decreases, and/or
when the DC-to-DC converter (100) operates in the buck mode, a value of the third power value (PW3) when the output power gradually increases is equal to a sum of the buffer power and a value of the third power value (PW3) when the output power gradually decreases.

17. The phase shift control method as claimed in claim 1, wherein the resonant tank (30) comprises a transformer (TR); the first switch bridge arm (11) comprises a first upper switch (Q1) and a first lower switch (Q3) connected in series, the second switch bridge arm (12) comprises a second upper switch (Q2) and a second lower switch (Q4) connected in series, the third switch bridge arm (21) comprises a third upper switch (Q5) and a third lower switch (Q7) connected in series, and the fourth switch bridge arm (22) comprises a fourth upper switch (Q6) and a fourth lower switch (Q8) connected in series; wherein a connection midpoint (N1) in the first switch bridge arm (11) and a connection midpoint (N2) in the second switch bridge arm (12) are correspondingly connected to two ends of a primary-side winding of the transformer (TR), and a connection midpoint (N3) in the third switch bridge arm (21) and a connection midpoint (N4) in the fourth switch bridge arm (22) are correspondingly connected to two ends of a secondary-side winding of the transformer (TR).

18. The phase shift control method as claimed in claim 1, wherein the DC-to-DC converter (100) is a bidirectional converter, and/or the resonant tank (30) is an LLC resonant tank or a CLLC resonant tank.

19. A DC-to-DC converter (100), **characterized in that** the DC-to-DC converter (100) comprising:
a primary-side circuit (10) comprising a first switch bridge arm (11) and a second switch bridge arm (12),
a secondar-side circuit (20) comprising a third switch bridge arm (21) and a fourth switch bridge arm (22),
a resonant tank (30) coupled between the primary-side circuit (10) and the secondar-side circuit (20), and
a control unit configured to executing the phase shift control method in any one of claims 1 to 18.
